# EUROPEAN PATENT APPLICATION

(11) **EP 3 409 745 A1**
(43) Date of publication of application: **05.12.2018**
(21) Application number: 17744137.5
(22) Date of filing: 23.01.2017
(51) Int. Cl.: C09K 5/10

(54) **ENGINE COOLANT COMPOSITION FOR AUTOMOBILES AND ENGINE CONCENTRATED COOLANT COMPOSITION FOR AUTOMOBILES**

(30) Priority: 28.01.2016 JP 2016014720
(71) Applicant: TOYOTA JIDOSHA KABUSHIKI KAISHA, Toyota-shi, Aichi-ken 471-8571 (JP); Shin-Etsu Chemical Co., Ltd., Tokyo 100-0004 (JP)
(72) Inventor: KODAMA Yasuaki, Toyota-shi Aichi 471-8571 (JP); SAKURAI Takato, Annaka-shi Gunma 379-0224 (JP); YAEDA Kazuhito, Shizuoka-shi Shizuoka 424-8558 (JP); YOSHII Yoichiro, Shizuoka-shi Shizuoka 424-8558 (JP); MAKINO Ryota, Shizuoka-shi Shizuoka 424-8558 (JP); NAGASAWA Masayuki, Shizuoka-shi Shizuoka 424-8558 (JP)
(74) Representative: Kuhnen & Wacker Patent- und Rechtsanwaltsbüro PartG mbB
(86) International application number: PCT/JP2017/002142
(87) International publication number: WO 2017/130907

(57) **Abstract**

This invention provides a coolant composition for an automobile engine which achieves retained thickening effects of a surfactant as a viscosity, and a concentrated coolant composition for an automobile engine used to obtain such coolant composition. Such coolant composition for an automobile engine comprises: (A) a silicone-based oil compound; (B) polyether-modified silicone; (C) a non-silicone-based surfactant; and (D) an aqueous base, wherein the silicone-based oil compound (A) comprises: (A1) at least one selected from among organopolysiloxanes represented by General Formula (1); and (A2) a filler, and the polyether-modified silicone (B) is at least one member selected from among polyoxyalkylene-modified organopolysiloxanes represented by General Formula (2).

RₘSiO_{(4-m)/2} (1)

R¹₂R³SiO-(R¹₂SiO)ₓ-(R¹R²SiO)_{y}-SiR¹₂R³ (2)

## Description

### Technical Field

The present invention relates to a coolant composition for an automobile engine and a concentrated coolant composition for an automobile engine.

### Background Art

To date, a wide variety of coolant solutions for cooling automobile engines and the like have been known, and, in particular, water has been often used as an engine coolant because of its cooling capacity that is the highest among other coolant solutions. However, so-called pure water free from an electrolyte or other substances gets frozen at 0°C or lower and a volume thereof is increased. Thus, such pure water would disadvantageously damage engines or radiators. In order to avoid such damage, pure water was not used alone, and a coolant composition prepared by diluting a glycol such as ethylene glycol as a base material with water to achieve a freezing temperature of interest, and adding various additives for protecting metals, rubber, resin, and the like used for engines and radiators against deterioration, according to need, has been used from the viewpoint of antifreeze performance.

When a glycol such as ethylene glycol was used, however, the viscosity of a coolant composition would disadvantageously be raised to a significant extent, in particular, at low temperatures. Thus, addition of a surfactant as a viscosity modifier was adopted, so as to modify the viscosity of the coolant. By incorporating a surfactant into a coolant, the viscosity of the coolant solution was adequately increased, and early warm-up of engines was accelerated, so as to improve the fuel economy.

For example, Patent Literature 1 discloses a coolant composition comprising 3 types of alkyl ethers each comprising alkyl groups with a different number of carbon atoms and a different average number of moles added of ethylene oxide and/or propylene oxide, water, and/or a water-soluble organic solvent. Also, Patent Literature 2 discloses a coolant composition comprising 2 types of alkyl ethers, water, and/or a water-soluble organic solvent. Further, Patent Literature 3 discloses an antifreeze coolant composition comprising ethylene glycol, ion-exchange water, an antifoam agent, and additives, wherein the additives are 0.5 to 2.0% by weight of octanoic acid, 0.5% to 2.0% by weight of benzoic acid, 0.1% to 1.0% by weight of sodium phosphate, 0.1% to 1.0% by weight of sodium nitrate, 0.3% to 1.0% by weight of benzotriazole, 0.2% to 1.0% by weight of tolytriazole, 0.1% to 1.5% by weight of sodium hydroxide, and 0.1% to 0.8% by weight of sodium molybdate.

The surfactant as described above, however, is highly effervescent. When such surfactant is actually used, accordingly, it would adversely affect the performance of the coolant to a significant extent. For example, it may be difficult to load the coolant on a vehicle and the cooling capacity of the coolant may be deteriorated. While Patent Literatures 1 to 3 describe that an antifoam agent is added to prevent the surfactant from foaming, Patent Literatures 1 to 3 do not describe that foaming of the surfactant was suppressed with the addition of an antifoam agent. Thus, some antifoam agents were problematic in terms of: (1) thickening effects of a surfactant as a viscosity modifier would be significantly lowered; and (2) while antifoam effects would be exerted either at high temperature or low temperature, it would be impossible to exert antifoam effects both at high temperature and low temperature. When a surfactant is used as a viscosity modifier, specifically, hydrophobic moieties (e. g., alkyl groups) of surfactants aggregate to form micelles and thickening effects are exerted. When an antifoam agent strongly binds to a hydrophobic moiety (e. g., an alkyl group) of a surfactant, however, micelle formation is blocked, and thickening effects cannot be exerted. Such problems became particularly significant when an antifoam agent was polyoxyethylene alkyl ether, a higher alcohol, or mineral oil. In order to suppress the surfactant from strongly foaming, also, an antifoam agent is required to have the high capacity for surface tension reduction, and antifoam effects are necessary both at high temperature and low temperature.

Meanwhile, a variety of general antifoam agents for preventing a surfactant from foaming have been developed. For example, Patent Literature 4 discloses a composition of an antifoam agent comprising: (i) 0.1% to 40% by weight of an oil compound of hydrophobic organopolysiloxane and microfine silica powder; (ii) 1% to 60% by weight of polyoxyalkylene-modified silicone oil; (iii) 0% to 55% by weight of a polyoxyalkylene polymer, (iv) 0.01% to 2% by weight of long-chain alkyl-containing poly(meth)acrylate or xanthan gum; and (v) a balance consisting of water. Also, Patent Literature 5 discloses a composition of an antifoam agent comprising: (i) 5% to 60% by weight of an oil compound of 100 parts by weight of organopolysiloxane, which is hydrophobic and has viscosity of 10 to 500,000 cSt at 25°C, and 0.1 to 20 parts by weight of microfine silica powder, which has a specific surface area of 100 m²/g or more measured by the BET method; (ii) 5% to 95% by weight of hydrophilic polyoxyalkylene-modified silicone oil, which has a 1% aqueous solution of which has a clouding point at 40°C or higher and viscosity of 10 to 100,000 cSt at 25 °C; and (iii) 0% to 90% by weight of a polyoxyalkylene polymer, which has a molecular weight of 500 to 5,000. Further, Patent Literature 6 discloses a composition of an antifoam agent comprising: (i) 5% to 90% by weight of polyoxyalkylene-modified silicone oil represented by the general formula: R³R¹₂SiO-(R¹₂SiO)ₓ-(R¹R²SiO)_{y}-SiR¹R³; (ii) 5% to 60% by weight of an oil compound of 100 parts by weight of silicone oil represented by the general formula: (R⁶R⁷R⁸SiO_{1/2})ₗ(R⁹R¹⁰SiO_{2/2})ₘ(R¹¹SiO_{3/2})ₙ and 0.1 to 20 parts by weight of microfine silica powder; and (iii) 5% to 90% by weight of a polyoxyalkylene polymer.

In Patent Literatures 4 to 6, however, the problems peculiar to automobile engine coolants as described in (1) and (2) above are not to be dissolved. That is, Patent Literatures 4 to 6 are not able to provide any solutions for such problems.

### Citation List

### Patent Literature

Patent Literature 1: JP 2015-74669 A
Patent Literature 2: JP 2014-189737 A
Patent Literature 3: JP H10-338868 A (1998)
Patent Literature 4: JP H7-328318 A (1995)
Patent Literature 5: JP H8-173789 A (1996)
Patent Literature 6: JP H8-309104 A (1996)

### Summary of Invention

### Technical Problem

It is an object of the present invention to provide a coolant composition for an automobile engine which achieves retained thickening effects of a surfactant as a viscosity modifier and suppressed surfactant foaming. It is another object of the present invention to provide a concentrated coolant composition for an automobile engine used to obtain such coolant composition for an automobile engine.

### Solution to Problem

The present inventors had conducted concentrated studies in order to attain the above objects. As a result, they discovered that such objects could be attained by incorporating a particular silicone compound into a coolant composition comprising a non-silicone-based surfactant and an aqueous base. This has led to the completion of the present invention.

### Specifically, the present invention encompasses the following.

[1] A coolant composition for an automobile engine comprising components below:
   (A) a silicone-based oil compound;
   (B) polyether-modified silicone;
   (C) a non-silicone-based surfactant; and
   (D) an aqueous base,
   wherein,
   the silicone-based oil compound (A) comprises:
   (A1) at least one member selected from among organopolysiloxanes represented by General Formula (1):

      RₘSiO_{(4-m)/2} (1)

      wherein R each independently represents a substituted or unsubstituted monovalent hydrocarbon group; and m is a number from 1.9 to 2.2; and
   (A2) a filler, and
      the polyether-modified silicone (B) is at least one member selected from among polyoxyalkylene-modified organopolysiloxanes represented by General Formula (2):

      R¹₂R³SiO-(R¹₂SiO)ₓ-(R¹R²SiO)_{y}-SiR¹₂R³ (2)

      wherein
      R¹ each independently represent the same or different and substituted or unsubstituted monovalent hydrocarbon group having 1 to 18 carbon atoms;
      R² represents a monovalent organic group represented by General Formula (3):

      -R⁴-O(CH₂CH₂O)ₐ-(CH₂(CH₃)CHO)_{b}-R⁵ (3)

      wherein
      R⁴ represents a divalent hydrocarbon group having 2 to 6 carbon atoms;
      R⁵ represents a hydrogen atom or a monovalent organic group selected from the group consisting of alkyl having 1 to 6 carbon atoms, acetyl, and isocyan groups;
      a is a positive number, b is 0 or a positive number, a total of "a and b" is 2 to 80 (2 ≤ a + b ≤ 80), and the ratio of b to a (b/a) is 0 to 4;
      R³ represents the group defined as R¹ or R² above, a hydroxyl group, or an alkoxy group having 1 to 6 carbon atoms;
      x is an integer from 3 to 200; and
      y is an integer from 1 to 60.
[2] The coolant composition according to [1], wherein the content of the component (A) is 0.001 to 1 part by mass, relative to 100 parts by mass of the coolant composition, and the content of the component (B) is 0.001 to 10 parts by mass, relative to 100 parts by mass of the coolant composition.
[3] The coolant composition according to [1] or [2], wherein the mass ratio of the silicone-based oil compound (A) to the polyether-modified silicone (B) ((A):(B)) is 9:1 to 1:9.
[4] The coolant composition according to any of [1] to [3], wherein the aqueous base contains an organic solvent.
[5] A concentrated coolant composition for an automobile engine used for obtaining the coolant composition according to any of [1] to [4], by dilution to 2- to 10-fold by mass with an aqueous base before use.
[6] The concentrated coolant composition according to [5], which comprises the components below relative to 100 parts by mass of the concentrated coolant composition:
   (A) 0.002 to 10 parts by mass of a silicone-based oil compound;
   (B) 0.002 to 90 parts by mass of polyether-modified silicone;
   (C) 0.02 to 99.98 parts by mass of a non-silicone-based surfactant; and
   (D') 0 to 99.8 parts by mass of an aqueous solvent.

This description includes part or all of the content as disclosed in Japanese Patent Application No. 2016-014720, which is a priority document of the present application.

### Advantageous Effects of Invention

The coolant composition for an automobile engine according to the present invention retains thickening effects of a surfactant as a viscosity modifier and suppresses surfactant foaming, and such coolant composition can improve fuel economy of internal combustion engines. Also, the concentrated coolant composition for an automobile engine according to the present invention can be used to obtain such coolant composition for an automobile engine through dilution.

### Description of Embodiments

The coolant composition for an automobile engine according to the present invention (hereafter, it is also referred to as "the coolant composition according to the present invention") comprises: (A) a particular type of silicone-based oil compound; (B) a particular type of polyether-modified silicone; (C) a non-silicone-based surfactant; and (D) an aqueous base. The present inventors discovered that, by incorporating a particular type of silicone compound into a coolant composition comprising a non-silicone-based surfactant and an aqueous base, (1) significant deterioration in thickening effects of a surfactant (i.e., a viscosity modifier) can be prevented and (2) antifoam effects can be exerted both at high temperature and low temperature. The term "low temperature" used herein refers to, for example, 25°C, and the term "high temperature" refers to, for example, 90°C. The silicone-based oil compound (A), although not limited to the theory, is capable of retaining thickening effects of the surfactant and exerting antifoam effects in an aqueous system because of its weak affinity to a hydrophobic moiety (e.g., an alkyl group) of a surfactant (i.e., a viscosity modifier) that is critical for exerting thickening effects. By incorporating the polyether-modified silicone (B) into the silicone-based oil compound (A) as a dispersant, also, the silicone-based oil compound (A) as an antifoam agent can be suppressed from separation.

The silicone-based oil compound (A) used for the coolant composition according to the present invention serves as a main component for imparting the coolant composition according to the present invention with antifoam performance, which comprises the organopolysiloxane (A1) and filler (A2). The silicone-based oil compound (A) may be used alone or in combination of two or more.

The organopolysiloxane (A1) is represented by General Formula (1):

RₘSiO_{(4-m)/2} (1)

wherein R each independently represents a substituted or unsubstituted monovalent hydrocarbon group; and m is a number from 1.9 to 2.2. The organopolysiloxane (A1) is inherently hydrophobic. The organopolysiloxane (Al) may be linear or branched. The organopolysiloxane (A1) may be used alone or in combination of two or more.

In General Formula (1), R preferably each independently represents a substituted or unsubstituted monovalent hydrocarbon group having 1 to 18 carbon atoms. Examples of unsubstituted monovalent hydrocarbon groups include: alkyl groups, such as methyl, ethyl, propyl, butyl, pentyl, hexyl, heptyl, octyl, nonyl, decyl, dodecyl, tridecyl, tetradecyl, hexadecyl, and octadecyl groups; cycloalkyl groups, such as cycolohexyl groups; alkenyl groups, such as vinyl and allyl groups; aryl groups, such as phenyl and tolyl groups; and aryl alkenyl groups, such as styryl and α-methyl styryl groups. Examples of substituted monovalent hydrocarbon groups include those resulting from substitution of all or a part of the hydrogen atoms bound to the carbon atoms of the groups described above with halogen atoms, cyano groups, amino groups, and hydroxyl groups, such as chloromethyl, 3-chloropropyl, 3,3,3-trifluoropropyl, cyanoethyl, 3-aminopropyl, and N-(β-aminoethyl)-γ-aminopropyl groups.

In General Formula (1), 80% or more, and, in particular, 90% or more of the total number of groups represented by R are preferably methyl groups, from the viewpoint of antifoam performance and economic efficiency.

In General Formula (1), m is a number that satisfies the condition 1.9 ≤ m ≤ 2.2 and it is preferably a number that satisfies the condition 1.95 ≤ m ≤ 2.15 from the viewpoint of antifoam performance and operability.

The terminus of organopolysiloxane represented by General Formula (1) may be capped by a triorganosylyl group represented by R₃Si- wherein R is as defined in Formula (1) above, or a diorganohydroxysylyl group represented by HOR₂Si- wherein R is as defined in Formula (1) above.

From the viewpoint of antifoam performance and operability, the viscosity of the organopolysiloxane (A1) measured at 25°C with the use of the Ostwald viscometer is preferably 10 to 100,000 mm²/s, and more preferably 50 to 30,000 mm²/s. When the viscosity is lower than the lower limit indicated above, the antifoam performance of the silicone-based oil compound (A) is deteriorated. When the viscosity is higher than the upper limit indicated above, the viscosity of the silicone-based oil compound (A) is increased, and operability is deteriorated.

The filler (A2) is added to improve antifoam effects of the organopolysiloxane (A1). Specific examples thereof include microfine silica powder, titania, grounded quartz, alumina, aluminosilicate, organic wax (e.g., polyethylene wax and microcrystalline wax), zinc oxide, magnesium oxide, aliphatic carboxylic acid salt (e.g., a reaction product of cyclohexylamine and isocyanate), and alkylamide (e.g., ethylene-bis-stearamide or methylene-bis-stearylamide). From the viewpoint of affinity with organopolysiloxane and easy availability, microfine silica powder is preferable. The filler (A2) may be used alone or in combination of two or more.

As the microfine silica powder, known microfine silica powder can be used. Examples thereof include fumed silica, precipitated silica, and calcined silica. Such microfine silica powder may be used alone or in combination of two or more. The specific surface area of the microfine silica powder (measured by the BET method) is preferably at least 50 m²/g, more preferably 50 to 700m²/g, and particularly preferably 80 to 500m²/g from the viewpoint of antifoam performance and operability. When the specific surface area is smaller than 50 m²/g, the antifoam performance may be deteriorated. When the specific surface area is larger than 700 m²/g, the viscosity of the silicone-based oil compound (A) is increased, and operability is deteriorated.

The microfine silica powder may be silica with an untreated surface or silica with a hydrophobic surface. The surface of silica can be made hydrophobic by a conventional technique. Specifically, hydrophilic silica is treated with an organic silicon compound, such as organochlorosilane, organoalkoxysilane, organodisilazane, organopolysiloxane, or organohydrogenpolysiloxane.

The amount of the organopolysiloxane (A1) added is, from the viewpoint of antifoam performance and operability, preferably 70 to 99 parts by mass, and more preferably 80 to 97 parts by mass, relative to 100 parts by mass of the silicone-based oil compound (A).

The amount of the filler (A2) added is, from the viewpoint of antifoam performance and operability, preferably 1 to 20 parts by mass, and more preferably 3 to 15 parts by mass, relative to 100 parts by mass of the silicone-based oil compound (A). When the amount of addition is less than 1 part by mass, the antifoam performance is deteriorated. When the amount of addition is more than 20 parts by mass, the viscosity of the silicone-based oil compound (A) is increased, and operability is deteriorated.

The silicone-based oil compound (A) used for the coolant composition according to the present invention can be prepared in accordance with a conventional technique. For example, the organopolysiloxane (A1) is mixed with the filler (A2), the resulting mixture is heated at 80°C to 200°C, and neutral and/or low-boiling fractions are then removed, according to need.

The silicone-based oil compound (A) used for the coolant composition according to the present invention may comprise, for example, an inorganic ammonium salt, an organic silicon compound, siloxane resin other than components (A1), (A2), and (B), and an alkaline catalyst, so as to improve persistence of the antifoam performance, performance at high temperature, dilution stability, and anti-alkaline properties of the antifoam agent. Such components to be incorporated into the coolant composition according to the present invention are defined as other additives described below.

The polyether-modified silicone (B) used for the coolant composition according to the present invention is polyoxyalkylene-modified organopolysiloxane represented by General Formula (2):

R¹₂R³SiO-(R¹₂SiO)ₓ-(R¹R²SiO)_{y}-SiR¹₂R³ (2)

wherein
R¹ each independently represent the same or different and substituted or unsubstituted monovalent hydrocarbon group having 1 to 18 carbon atoms;
R² represents a monovalent organic group represented by General Formula (3):

-R⁴-O(CH₂CH₂O)ₐ-(CH₂(CH₃)CHO)_{b}-R⁵ (3)

wherein
R⁴ represents a divalent hydrocarbon group having 2 to 6 carbon atoms;
R⁵ represents a hydrogen atom or a monovalent organic group selected from the group consisting of alkyl having 1 to 6 carbon atoms, acetyl, and isocyan groups;
a is a positive number, b is 0 or a positive number, a total of "a and b" is 2 to 80 (2 ≤ a + b ≤ 80), and the ratio of b to a (b/a) is 0 to 4;
R³ represents the group exemplified as R¹ or R² above, a hydroxyl group, or an alkoxy group having 1 to 6 carbon atoms;
x is an integer from 3 to 200; and
y is an integer from 1 to 60. This can disperse the silicone-based oil compound (A) in the aqueous base (D) described below.

In General Formula (2), R¹ each independently represent the same or different and substituted or unsubstituted monovalent hydrocarbon group having 1 to 18 carbon atoms. Examples of unsubstituted monovalent hydrocarbon groups include: alkyl groups, such as methyl, ethyl, propyl, butyl, pentyl, hexyl, heptyl, octyl, nonyl, decyl, dodecyl, tridecyl, tetradecyl, hexadecyl, and octadecyl groups; cycloalkyl groups, such as cycolohexyl groups; alkenyl groups, such as vinyl and allyl groups; aryl groups, such as phenyl and tolyl groups; and aryl alkenyl groups, such as styryl and α-methyl styryl groups. Examples of substituted monovalent hydrocarbon groups include those resulting from substitution of all or a part of the hydrogen atoms bound to the carbon atoms of the groups described above with halogen atoms, cyano groups, amino groups, and hydroxyl groups, such as chloromethyl, 3-chloropropyl, 3,3,3-trifluoropropyl, cyanoethyl, 3-aminopropyl, and N-(β-aminoethyl)-γ-aminopropyl groups.

In General Formula (2), x is a number from 3 to 200 and it is preferably an integer of 10 to 150, from the viewpoint of dispersibility of the silicone-based oil compound (A) and operability. In General Formula (2), y is a number from 1 to 60 and it is preferably an integer of 1 to 30, from the viewpoint of dispersibility of the silicone-based oil compound (A) and operability.

In General Formula (3), R⁴ represents a divalent hydrocarbon group having 2 to 6 carbon atoms from the viewpoint of easy availability of raw materials. Specific examples include alkylene and alkenylene groups, such as ethylene, propylene, butylene, pentene, and hexene groups.

In General Formula (3), R⁵ represents a hydrogen atom or a monovalent organic group selected from the group consisting of alkyl having 1 to 6 carbon atoms, acetyl, and isocyan groups. Examples of such alkyl groups include methyl, ethyl, propyl, butyl, and pentyl groups.

In General Formula (3), a is a positive number, b is 0 or a positive number, and a total of "a and b" is a positive number that satisfies the conditions 2 ≤ a + b ≤ 80, preferably 3 ≤ a + b ≤ 60, and particularly preferably 5 ≤ a + b ≤ 50. When a total of "a and b" is a number within the range above, the silicone-based oil compound (A) can be more easily dispersed in a coolant composition even when water solubility of the silicone-based oil compound (A) is not very high. When the number is lower than the lower limit indicated above, the performance of dispersing the silicone-based oil compound (A) in the coolant composition is deteriorated. When the number is higher than the upper limit, the compatibility between the silicone-based oil compound (A) and the polyether-modified silicone (B) is deteriorated, and the performance thereof to be dispersed in the coolant composition may be deteriorated.

In General Formula (3), the ratio of b to a (b/a) is 0 to 4 (0/10 to 8/2), preferably 0 to 6/4, and particularly preferably 0 to 4/6. When the ratio of b to a (b/a) satisfies the conditions described above, accordingly, the silicone-based oil compound (A) can be more easily dispersed in a coolant composition even when water solubility thereof is not very high. Also, thermostability and antifoam effects of the antifoam agent can be more sufficiently maintained. When the number is higher than the upper limit, the performance of dispersing the silicone-based oil compound (A) into the coolant composition is deteriorated.

In General Formula (2), R³ represents the group exemplified as R¹ or R² above, a hydroxyl group, or an alkoxy group having 1 to 6 carbon atoms. Examples of the alkoxy groups include methoxy, ethoxy, propoxy, and butoxy groups.

The viscosity of the polyether-modified silicone (B) used for the coolant composition according to the present invention measured at 25°C with the use of the Ostwald viscometer is preferably 10 to 10,000 mm²/s, more preferably 50 to 8,000 mm²/s, and particularly preferably 200 to 5,000 mm²/s, from the viewpoint of dispersibility of the silicone-based oil compound (A) and operability. The polyether-modified silicone (B) may be used alone or in combination of two or more.

Specific examples of the polyether-modified silicone (B) used for the coolant composition according to the present invention include the compounds shown below.

(CH₃)₃SiO-[(CH₃)₂SiO]₃₀-[(CH₃)R²SiO]₃-Si(CH₃)₃ R²:-C₃H₆O-(C₂H₄O)₈-H (B-1)

(CH₃)₃SiO-[(CH₃)₂SiO]₂₈-[(CH₃)R²SiO]₅-Si(CH₃)₃ R²:-C₃H₆O-(C₂H₄O)₁₀-(C₃H₆O)₂-C₄H₉ (B-2)

(CH₃)₃SiO-[(CH₃)₂SiO]₂₅-[(CH₃)R²SiO]₅-Si(CH₃)₃ R²:-C₃H₆O-(C₂H₄O)₈-(C₃H₆O)₃₀-C₄H₉ (B-3)

(CH₃)₃SiO-[(CH₃)₂SiO]₂₅-[(CH₃)R²SiO]₅-Si(CHₐ)₃ R²:-C₃H₆O-(C₂H₄O)₃₀-(C₃H₆O)₁₀-C₄H₉ (B-4)

(CH₃)₃SiO-[(CH₃)₂SiO]₄₀-[(CH₃)R²SiO]₄-Si(CH₃)₃ R²:-C₃H₆O-(C₂H₄O)₂₁-(C₃H₆O)₇-COCH₃ (B-5)

Such compounds are preferably used as polyether-modified silicone (B) because of excellent dispersibility of the silicone-based oil compound (A) and operability.

In the coolant composition according to the present invention, the mass ratio of the silicone-based oil compound (A) to the polyether-modified silicone (B) ((A):(B)) is preferably 9:1 to 1:9, more preferably 8:2 to 2:8, and particularly preferably 7:3 to 3:7. Thus, (1) significant deterioration in thickening effects of a surfactant (i.e., a viscosity modifier) can be prevented more efficiently and (2) antifoam effects can be enhanced both at high temperature and low temperature.

The non-silicone-based surfactant (C) used for the coolant composition according to the present invention is not particularly limited, provided that it can be used for a coolant composition as a general viscosity modifier and it can exert the effects of the present invention. The surfactant may be any of nonionic, anionic, cationic, and amphoteric surfactants. The non-silicone-based surfactant (C) preferably exerts thickening effects by forming micelles through aggregation of hydrophobic moieties (e. g., alkyl groups) of surfactants. The non-silicone-based surfactant (C) may be used alone or in combination of two or more.

Specific examples of nonionic surfactants include a compound having polyethylene glycol chains, ethylene glycol fatty acid ester, propylene glycol fatty acid ester, glycerin fatty acid ester, polyglycerin fatty acid ester, and fatty acid alkanolamide. From the viewpoint of thermostability and water solubility, a compound having polyethylene glycol chains is preferable. Examples of compounds having polyethylene glycol chains include polyoxyethylene polyoxypropylene glycol, polyoxyethylene monoalkyl ether, polyoxyethylene dialkyl ether, polyoxyethylene polyoxypropylene alkyl ether, polyoxyethylene alkyl phenyl ether, polyethylene glycol monofatty acid ester, polyethylene glycol difatty acid ester, polyoxyethylene sorbitan fatty acid ester, polyoxyethylene sorbitol fatty acid ester, polyoxyethylene glycerin fatty acid ester, polyoxyethylene castor oil, polyoxyethylene hydrogenated castor oil, and polyoxyethylene fatty acid amide. Among them, fatty acid alkanolamide, polyethylene glycol difatty acid ester, and polyoxyethylene fatty acid amide are particularly preferable because an increase in the kinematic viscosity at 25°C is high at a small amount thereof added; that is, micelles are easily formed.

Examples of anionic surfactants include fatty acid salt, alkyl phosphate ester salt, and polyoxyethylene alkyl ether phosphate ester salt.

An example of a cationic surfactant is ethyl sulfuric acid lanolin fatty acid aminopropyl ethyl dimethyl ammonium.

An example of an amphoteric surfactant is alkylamine oxide.

The non-silicone-based surfactant (C) used for the coolant composition according to the present invention is not particularly limited, provided that it can be used for a coolant composition as a general viscosity modifier and the effects of the present invention are exerted. An alkyl has preferably 10 to 30, more preferably 12 to 25, and particularly preferably 15 to 22 carbon atoms.

Examples of the aqueous base (D) used for the coolant composition according to the present invention include water and an organic solvent. Water or an organic solvent can be used alone, and a mixture of water and an organic solvent can be used. From the viewpoint of antifreeze performance, use of a mixture of water and an organic solvent is preferable. It is preferable that the coolant composition according to the present invention comprise the aqueous base (D) as a main component. The term "main component" used herein refers to a base component of the coolant composition, and the amount of the main component is the greatest among other components in the coolant composition. According to need, the aqueous base (D) may comprise additives and the like, provided that the effects of the present invention are adequately exerted. In this description, such components to be contained in the coolant composition according to the present invention are defined as "other additives" described below.

The organic solvent is not particularly limited, provided that it can be used for a general coolant composition and the effects of the present invention are exerted, with an aqueous solvent being preferable. Examples thereof include one or more types of an alcohol selected from the group consisting of a monohydric alcohol, a dihydric alcohol, a trihydric alcohol, and glycol monoalkyl ether.

Examples of a monohydric alcohol include methanol, ethanol, propanol, butanol, pentanol, hexanol, heptanol, and octanol, and such alcohol may be used alone or in combination of two or more.

Examples of a dihydric alcohol include ethylene glycol, diethylene glycol, triethylene glycol, propylene glycol, 1,3-propanediol, 1,4-butanediol, 1,3-butanediol, 1,5-pentanediol, and hexylene glycol, and such alcohol may be used alone or in combination of two or more.

Examples of a trihydric alcohol include glycerin, trimethylolethane, trimethylolpropane, 5-methyl-1,2,4-heptanetriol, and 1,2,6-hexanetriol, and such alcohol may be used alone or in combination of two or more.

Examples of glycol monoalkyl ether include ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether, and such alcohol may be used alone or in combination of two or more.

Among the organic solvents mentioned above, ethylene glycol, propylene glycol, and 1,3-propanediol are preferable from the viewpoint of easy handling, cost, and availability.

Accordingly, a base preferably contains one or more members selected from the group consisting of ethylene glycol, propylene glycol, 1,3-propanediol, and water, and a base more preferably contains ethylene glycol and water. Also, a base is preferably composed of one or more members selected from the group consisting of ethylene glycol, propylene glycol, 1,3-propanediol, and water, and a base is more preferably composed of ethylene glycol and water. Water used as the base is preferably ion-exchange water.

In 100 parts by mass of the coolant composition according to the present invention, the base content is preferably 50 parts by mass or more, more preferably 75 parts by mass or more, further preferably 80 parts by mass or more, and furthermore preferably 90 parts by mass or more, from the viewpoint of functions thereof as a coolant solution. The base content is preferably 99.92 parts by mass or less, more preferably 99.9 parts by mass or less, further preferably 99.8 parts by mass or less, and furthermore preferably 99.7 parts by mass or less, from the viewpoint that components (A) to (D) are to be incorporated. From both the viewpoints mentioned above, the base content is preferably 50 to 99.92 parts by mass, more preferably 80 to 99.9 parts by mass, further preferably 90 to 99.9 parts by mass, still further preferably 90 to 99.8 parts by mass, and furthermore preferably 90 to 99.7 parts by mass.

When a base comprises water and an alcohol, the proportion of water to an alcohol can be adequately adjusted from the viewpoint of antifreeze performance and flammability. The proportion of water to alcohol in the base is preferably 20:80 to 90:10 (water:alcohol) so as to avoid the flash point, and it is more preferably 40:60 to 75:25.

The content of the silicone-based oil compound (A) in the coolant composition according to the present invention is preferably 0.001 to 1.0 parts by mass, more preferably 0.005 to 1.0 parts by mass, and particularly preferably 0.01 to 0.5 parts by mass, relative to 100 parts by mass of the coolant composition, so as to create a better balance between thickening effects and antifoam effects of the surfactant (i.e., a viscosity modifier).

The content of the polyether-modified silicone (B) in the coolant composition according to the present invention is preferably 0.001 to 10 parts by mass, more preferably 0.005 to 5.0 parts by mass, and particularly preferably 0.01 to 1.0 parts by mass, relative to 100 parts by mass of the coolant composition, so as to create a better balance between thickening effects and antifoam effects of the surfactant (i.e., a viscosity modifier).

The content of the non-silicone-based surfactant (C) in the coolant composition according to the present invention is preferably 0.01 to 10 parts by mass, more preferably 0.01 to 8.0 parts by mass, and particularly preferably 0.1 to 5.0 parts by mass, relative to 100 parts by mass of the coolant composition, so as to create a better balance between thickening effects and antifoam effects of the surfactant (i.e., a viscosity modifier).

The coolant composition according to the present invention can further comprise other additives, in addition to the components (A) to (D) above, according to need, provided that the effects of the present invention are not adversely affected.

In order to effectively suppress metals used in the engine coolant pathway from corrosion, for example, the coolant composition according to the present invention can comprise at least one type of corrosion inhibitor, provided that the effects of the present invention are not adversely affected. Examples of corrosion inhibitors include phosphoric acid and/or a salt thereof, aliphatic carboxylic acid and/or a salt thereof, aromatic carboxylic acid and/or a salt thereof, a triazole, a thiazole, silicate, nitrate, nitrite, borate, molybdate, and amine salt. Such corrosion inhibitor can be used alone or in combination of two or more.

The coolant composition according to the present invention can also comprise, for example, a pH modifier, such as sodium hydroxide or potassium hydroxide, a colorant, a dye, or a dispersant, according to need, provided that the kinematic viscosity is not affected.

A total amount of the other additives to be incorporated is generally 10 parts by mass or less, and preferably 5 parts by mass or less, relative to 100 parts by mass of the composition.

In the present invention, a method for producing a coolant composition is not particularly limited, provided that the effects of the present invention are attained, and a general method for producing a coolant composition can be employed. For example, a coolant composition can be produced via homogeneous stirring at low temperature.

The present invention also relates to a concentrated coolant composition for an automobile engine (hereafter, it is also referred to as the concentrated coolant composition according to the present invention). The concentrated coolant composition according to the present invention comprises the components (A) to (C) of the coolant composition according to the present invention and, according to need, an aqueous solvent (D'). The concentrated coolant composition according to the present invention can be diluted to, for example, 2- to 10-fold by mass with the use of the aqueous base (D) and used to obtain the coolant composition according to the present invention. The aqueous solvent is a liquid that can be used for a general coolant composition, such as water or a glycol, and specific examples thereof are as described regarding the aqueous base (D) above. The aqueous solvent may be the same with or different from the aqueous base (D). When the silicone-based oil compound (A), the polyether-modified silicone (B), and the non-silicone-based surfactant (C) have already been concentrated in advance, the concentrated coolant composition according to the present invention can be diluted, and foaming capacity can then be suppressed. Thus, the concentrated coolant composition according to the present invention can be diluted with the aqueous base (D) immediately before it is mounted on engines, and it can be used as the coolant composition. The concentrated coolant composition according to the present invention can comprise other additives, provided that the effects of the resulting coolant composition according to the present invention are not adversely affected. Specific examples thereof are as described regarding the coolant composition according to the present invention above. Such additives may be incorporated into the aqueous solvent (D') and then used in that state.

The concentrated coolant composition according to an embodiment of the present invention comprises the components (A) to (D') below, relative to 100 parts by mass of the concentrated coolant composition:
(A) 0.002 to 10 parts by mass of the silicone-based oil compound;
(B) 0.002 to 90 parts by mass of the polyether-modified silicone;
(C) 0.02 to 99.98 parts by mass of the non-silicone-based surfactant; and
(D') 0 to 99.8 parts by mass of the aqueous solvent.

The present invention will be specifically described in the following examples, although these examples are not intended to limit the scope of the present invention. Numerical values in formulations below are parts by mass.

### Examples

### [1. Preparation of Coolant solution 1]

The materials in amounts shown in Table 1 below were mixed with stirring to prepare Coolant solution 1. In Table 1, a corrosion inhibitor (sebacic acid, manufactured by Kokura Synthetic Industries, Ltd.), a pH modifier (caustic potash, manufactured by DAISO Co., Ltd.), and the non-silicone-based surfactant (C) (a viscosity modifier, PEG-250 distearate, manufactured by Kao Corporation) were used. The kinematic viscosity of Coolant solution 1 measured at 25°C in accordance with JIS K 2283 was 21 mm²/s.

**Table 1**

| Material | Amount (parts by mass) |
|---|---|
| Ethylene glycol | 50.1 |
| Water | 44.4 |
| Corrosion inhibitor | 2 |
| pH modifier | 2.5 |
| Non-silicone-based surfactant (C) (Viscosity modifier) | 1 |
| Total | 100 |
| Kinematic viscosity at 25°C (mm²/s) | 21 |

### [2. Preparation of silicone-based oil compound (A)]

100 parts by mass of Dimethyl polysiloxane exhibiting viscosity of 10,000 mm²/s with a molecular chain thereof being capped by trimethylsilyl groups at both ends as inherently hydrophobic organopolysiloxane, 5 parts by mass of Aerosil R812 (specific surface area: 260 m²/g; manufactured by Nippon Aerosil Co.) as microfine silica powder, and 1 part by mass of potassium siliconate containing 3% by mass of potassium hydroxide as an alkaline catalyst were kneaded using a gate mixer under the nitrogen gas atmosphere at 150°C for 3 hours. The resultant was cooled to 100°C or lower and then neutralized with 2-chloroethanol. Subsequently, a low-boiling fraction was removed to obtain a silicone-based oil compound (A).

### [3. Polyether-modified silicone (B)]

As polyether-modified silicone (B), silicones (B-1) to (B-3) and (B'-1) shown below were used.

### EO-modified silicone (B-1):

Polyoxyethylene-modified organosiloxane with the average composition of which being represented by the following formula and the viscosity of which being 400 mm²/s.

(CH₃)₃SiO-[(CH₃)₂SiO]₃₀-[(CH₃)R²SiO]₃-Si(CH₃)₃ R²:-C₃H₆O-(C₂H₄O)₈-H (B-1)

### EO-PO-modified silicone (B-2):

Polyoxyethylene-polyoxypropylene-modified organosiloxane with the average composition of which being represented by the following formula and the viscosity of which being 1,000 mm²/s.

(CH₃)₃SiO-[(CH₃)₂SiO]₂₆-[(CH₃)R²SiO]₅-Si(CH₃)₃ R²:-CₐH₆O-(C₂H₄O)₁₀-(C₃H₆O)₂-C₄H₉ (B-2)

### EO-PO-modified silicone (B-3):

Polyoxyethylene-polyoxypropylene-modified organosiloxane with the average composition of which being represented by the following formula and the viscosity of which being 1,000 mm²/s.

(CH₃)₃SiO-[(CH₃)₂SiO]₂₅-[(CH₃)R²SiO]₅-Si(CH₃)₃ R²:-C₃H₆O-(C₂H₄O)₈-(C₃H₆O)₃₀-C₄H₉ (B-3)

### EO-PO-modified silicone (B'-1):

Polyoxyethylene-polyoxypropylene-modified organosiloxane with the average composition of which being represented by the following formula and the viscosity of which being 1,000 mm²/s (b/a=10).

(CH₃)₃SiO-[(CH₃)₂SiO]₂₅-[(CH₃)R²SiO]₅-Si(CH₃)₃ R²:-C₃H₆O-(C₂H₄O)₄-(C₃H₆O)₄₀-C₄H₉ (B'-1)

### [Examples 1 to 4 and Comparative Examples 1 to 7]

The silicone-based antifoam agents or antifoam agents shown in Tables 2 to 4 below were each mixed with Coolant solution 1 in amounts shown in Tables 2 to 4 (parts by mass) to bring the total amount to 100 parts by mass. Thus, the coolant compositions of Examples 1 to 4 and the coolant compositions of Comparative Examples 1 to 7 were prepared. In Tables 2 to 4, polypropylene glycol (P-2000, manufactured by ADEKA Corporation), POE alkyl ether (Newcol 2309-FZ, manufactured by Nippon Nyukazai Co., Ltd.), a higher alcohol (SN defoamer 573, manufactured by San Nopco Ltd.), and mineral oil (Nopco NXZ, manufactured by San Nopco Ltd.) were used.

### <Evaluation Test>

The resulting coolant compositions were subjected to the evaluation test described below.

### <1. Test of influence on viscosity characteristics>

The kinematic viscosity was measured at 25°C in accordance with JIS K 2283. When 80% or more kinematic viscosity of the tested coolant composition was maintained at 25°C relative to the kinematic viscosity of Coolant solution 1, the test subject was evaluated as "No influence on viscosity characteristics."

### <2. Test for antifoam performance evaluation at low temperature>

Foaming characteristics was tested in accordance with JIS K 2234 at a liquid temperature of 25°C without diluting the test subject. When the foam volume was 4 ml or less, the test subject was evaluated as "Good."

### <3. Test for antifoam performance evaluation at high temperature>

Foaming characteristics was tested in accordance with JIS K 2234 at a liquid temperature of 90°C without diluting the test subject. When the foam volume was 4 ml or less, the test subject was evaluated as "Good."

The results are shown in Tables 2 to 4.

**Table 2**

| | | Ex. 1 | Ex. 2 | Ex. 3 | Ex. 4 |
|---|---|---|---|---|---|
| Silicone-based | Silicon-based oil compound (A) | 0.001 | 0.009 | 0.1 | 0.9 |
| antifoam agent | EO-modified silicone (B-1) | 0.009 | 0.001 | 0.9 | 0.1 |
| Evaluation result | Influence on viscosity characteristics (mm²/s) | 21 | 21 | 22 | 21 |
| | Antifoam performance at low temperature (ml) | 4 | 2 | 2 | 2 |
| | Antifoam performance at high temperature (ml) | 2 | 0 | 0 | 0 |

As is apparent from Table 2, the kinematic viscosity of the coolant compositions of Examples 1 to 4 each comprising the silicone-based oil compound (A) and the polyether-modified silicone (B-1) (EO-modified dimethyl silicone, polyoxyethylene-methyl polysiloxane copolymer) at a ratio of 9:1 to 1:9 was not influenced with the addition of the antifoam agent. Thus, the early warm-up performance was not adversely affected with the addition of the antifoam agent. Also, the coolant compositions of Examples 1 to 4 were found to be good in antifoam performance both at low temperature and high temperature and have sufficiently maintained the antifoam capacity at high temperature.

**Table 3**

| | | Comp. Ex. 1 | Comp. Ex. 2 | Comp. Ex. 3 | Comp. Ex. 4 |
|---|---|---|---|---|---|
| Antifoam agent (Comparative) | Polypropylene glycol | - | 0.1 | - | - |
| | POE alkyl ether | - | - | 0.1 | - |
| | Higher alcohol | - | - | - | 0.1 |
| Evaluation result | Influence on viscosity characteristics (mm²/s) | 21 | 21 | 8 | 9 |
| | Antifoam performance at low temperature (ml) | 40 | 10 | 10 | 10 |
| | Antifoam performance at high temperature (ml) | 50 | 40 | 40 | 40 |

As is apparent from Table 3, the kinematic viscosity of the coolant composition of Comparative Example 1 that is not supplemented with the antifoam agent was not influenced with the addition of the antifoam agent, although antifoam performance was deteriorated both at low temperature and high temperature. While the kinematic viscosity of the coolant composition of Comparative Example 2 supplemented with polypropylene glycol, which is usually used as an antifoam agent, was not influenced, antifoam performance was not good at low temperature and high temperature. In addition, the kinematic viscosity of the coolant composition of Comparative Example 3 supplemented with POE alkyl ether and that of the coolant composition of Comparative Example 4 supplemented with a higher alcohol were deteriorated. This indicates that the early warm-up performance is adversely affected and that antifoam performance is not good at low temperature and high temperature.

**Table 4**

| | | Comp. Ex. 5 | Comp. Ex. 6 | Comp. Ex. 7 |
|---|---|---|---|---|
| Silicone-based antifoam agent | Silicon-based oil compound (A) | - | 0.1 | 0.1 |
| | EO-modified silicone (B-1) | 0.1 | - | - |
| | EO·PO-modified silicone (B'-1) | - | - | 0.9 |
| Evaluation result | Influence on viscosity characteristics (mm²/s) | 21 | Separated (not dispersible in coolant) | Separated (not dispersible in coolant) |
| | Antifoam performance at low temperature (ml) | 15 | | |
| | Antifoam performance at high temperature (ml) | 40 | | |

As is apparent from Table 4, the kinematic viscosity of the coolant composition of Comparative Example 5 that is not supplemented with the silicone-based oil compound (A) but is supplemented with the polyether-modified silicone (B-1) (EO-modified dimethyl silicone, polyoxyethylene-methyl polysiloxane copolymer) was not affected, although the antifoam performance was not sufficient both at low temperature and high temperature. The coolant composition of Comparative Example 6 that is supplemented with the silicone-based oil compound (A) but is not supplemented with the polyether-modified silicone (B) could not be dispersed in Coolant solution 1. Also, the coolant composition of Comparative Example 7 supplemented with polyether-modified silicone (B'-1) with a high PO ratio (b/a=10) could not be dispersed in Coolant solution 1.

### [Examples 5 and 6]

The silicone-based antifoam agents shown in Table 5 were each mixed with Coolant solution 1 in amounts shown in Table 5 (parts by mass) to bring the total amount to 100 parts by mass. Thus, the coolant compositions of Examples 5 and 6 were prepared.

The resulting coolant compositions were subjected to the evaluation tests described in 1 to 3 above. The results are shown in Table 5.

**Table 5**

| | | Ex. 5 | Ex. 6 |
|---|---|---|---|
| Silicone-based antifoam agent | Silicon-based oil compound (A) | 0.2 | 0.2 |
| | EO·PO-modified silicone (B-2) | 0.3 | - |
| | EO· PO-modified silicone (B-3) | - | 0.3 |
| Evaluation result | Influence on viscosity characteristics (mm²/s) | 21 | 21 |
| | Antifoam performance at low temperature (ml) | 2 | 2 |
| | Antifoam performance at high temperature (ml) | 0 | 0 |

As is apparent from Table 5, the kinematic viscosity of the coolant compositions of Examples 5 and 6 comprising the silicone-based oil compound (A) and the polyether-modified silicone (B-2) (EO-PO-modified dimethyl silicone, poly(oxyethyelene-oxypropylene)-methyl polysiloxane copolymer) was not influenced, and the early warm-up performance was not adversely affected. In addition, antifoam performance was good both at low temperature and high temperature.

### [4. Preparation of Coolant solution 2]

The materials in amounts shown in Table 6 below were mixed with stirring to prepare Coolant solution 2. The kinematic viscosity of Coolant solution 2 measured at 25°C in accordance with JIS K 2283 was 40 mm²/s and the kinematic viscosity measured at 100°C was 1.2 mm²/s. In Table 6, a corrosion inhibitor (sebacic acid, manufactured by Kokura Synthetic Industries, Ltd.), a pH modifier (caustic potash, manufactured by DAISO Co., Ltd.), and a viscosity modifier (PEG-250 distearate) were used.

**Table 6**

| Material | Amount (parts by mass) |
|---|---|
| Ethylene glycol | 49.4 |
| Water | 43.6 |
| Corrosion inhibitor | 2 |
| pH modifier | 2.5 |
| Non-silicone-based surfactant (C) (Viscosity modifier) | 2.5 |
| Total | 100 |
| Kinematic viscosity at 25°C (mm²/s) | 40 |

### [5. Preparation of Coolant solution 3]

The materials in amounts shown in Table 7 were mixed with stirring to prepare Coolant solution 3. The kinematic viscosity of Coolant solution 3 measured at 25°C in accordance with JIS K 2283 was 250 mm²/s and the kinematic viscosity measured at 100°C was 1.6 mm²/s. In Table 7, a corrosion inhibitor (sebacic acid, manufactured by Kokura Synthetic Industries, Ltd.), a pH modifier (caustic potash, manufactured by DAISO Co., Ltd.), and a viscosity modifier (PEG-250 distearate) were used.

**Table 7**

| Material | Amount (parts by mass) |
|---|---|
| Ethylene glycol | 48.6 |
| Water | 42.8 |
| Corrosion inhibitor | 2 |
| pH modifier | 2.5 |
| Non-silicone-based surfactant (C) (Viscosity modifier) | 4.1 |
| Total | 100 |
| Kinematic viscosity at 25°C (mm²/s) | 250 |

### [Examples 7 to 10]

The silicone-based antifoam agents shown in Table 8 were each mixed with Coolant solution 2 in amounts shown in Table 8 (parts by mass) to bring the total amount to 100 parts by mass. Thus, the coolant compositions of Examples 7 and 8 were prepared. The silicone-based antifoam agents shown in Table 9 were each mixed with Coolant solution 3 in amounts shown in Table 9 (parts by mass) to bring the total amount to 100 parts by mass. Thus, the coolant compositions of Examples 9 and 10 were prepared. The resulting coolant compositions were subjected to the evaluation tests described in 1 to 3 above. The results are shown in Tables 8 and 9.

**Table 8**

| | | Ex. 7 | Ex. 8 |
|---|---|---|---|
| Silicone-based antifoam agent | Silicon-based oil compound (A) | 0.1 | 0.9 |
| | EO-modified silicone (B-1) | 0.9 | 0.1 |
| Evaluation result | Influence on viscosity characteristics (mm²/s) | 41 | 44 |
| | Antifoam performance at low temperature (ml) | 2 | 2 |
| | Antifoam performance at high temperature (ml) | 0 | 0 |

**Table 9**

| | | Ex. 9 | Ex. 10 |
|---|---|---|---|
| Silicone-based antifoam agent | Silicon-based oil compound (A) | 0.1 | 0.9 |
| | EO-modified silicone (B-1) | 0.9 | 0.1 |
| Evaluation result | Influence on viscosity characteristics (mm²/s) | 260 | 250 |
| | Antifoam performance at low temperature (ml) | 1 | 1 |
| | Antifoam performance at high temperature (ml) | 3 | 3 |

The kinematic viscosity of coolant compositions of Examples 7 to 10 comprising the silicone-based oil compound (A) and the polyether-modified silicone (B-1) (EO-modified dimethyl silicone, polyoxyethylene-methyl polysiloxane copolymer) at 9:1 to 1:9 was not influenced, and the early warm-up performance was not adversely affected. In addition, antifoam performance was good both at low temperature and high temperature, and the antifoam capacity was sufficiently maintained at high temperature.

### Industrial Applicability

The coolant composition according to the present invention is preferably used for cooling internal combustion engines and particular preferably used for cooling automobile engines, invertors, batteries, and the like.

All publications, patents, and patent applications cited herein are incorporated herein by reference in their entirety.

## Claims

1. A coolant composition for an automobile engine comprising components below:
(A) a silicone-based oil compound;
(B) polyether-modified silicone;
(C) a non-silicone-based surfactant; and
(D) an aqueous base,
wherein,
the silicone-based oil compound (A) comprises:
(A1) at least one member selected from among organopolysiloxanes represented by General Formula (1):
RₘSiO_{(4-m)/2} (1)
wherein R each independently represents a substituted or unsubstituted monovalent hydrocarbon group; and m is a number from 1.9 to 2.2; and
(A2) a filler, and
the polyether-modified silicone (B) is at least one member selected from among polyoxyalkylene-modified organopolysiloxanes represented by General Formula (2):
R¹₂R³SiO-(R¹₂SiO)ₓ-(R¹R²SiO)_{y}-SiR¹₂R³ (2)
wherein
R¹ each independently represent the same or different and substituted or unsubstituted monovalent hydrocarbon group having 1 to 18 carbon atoms;
R² represents a monovalent organic group represented by General Formula (3):
-R₄-O(CH₂CH₂O)ₐ-(CH₂(CH₃)CHO)_{b}-R⁵ (3)
wherein
R⁴ represents a divalent hydrocarbon group having 2 to 6 carbon atoms;
R⁵ represents a hydrogen atom or a monovalent organic group selected from the group consisting of alkyl having 1 to 6 carbon atoms, acetyl, and isocyan groups;
a is a positive number, b is 0 or a positive number, a total of "a and b" is 2 to 80 (2 ≤ a + b ≤ 80), and the ratio of b to a (b/a) is 0 to 4;
R³ represents the group defined as R¹ or R² above, a hydroxyl group, or an alkoxy group having 1 to 6 carbon atoms;
x is an integer from 3 to 200; and
y is an integer from 1 to 60.

2. The coolant composition according to Claim 1, wherein the content of the component (A) is 0.001 to 1 part by mass, relative to 100 parts by mass of the coolant composition, and the content of the component (B) is 0.001 to 10 parts by mass, relative to 100 parts by mass of the coolant composition.

3. The coolant composition according to Claim 1 or 2, wherein the mass ratio of the silicone-based oil compound (A) to the polyether-modified silicone (B) ((A):(B)) is 9:1 to 1:9.

4. The coolant composition according to any one of Claims 1 to 3, wherein the aqueous base contains an organic solvent.

5. A concentrated coolant composition for an automobile engine used for obtaining the coolant composition according to any one of Claims 1 to 4, by dilution to 2- to 10-fold by mass with an aqueous base before use.

6. The concentrated coolant composition according to Claim 5, which comprises the components below relative to 100 parts by mass of the concentrated coolant composition:
(A) 0.002 to 10 parts by mass of a silicone-based oil compound;
(B) 0.002 to 90 parts by mass of polyether-modified silicone;
(C) 0.02 to 99.98 parts by mass of a non-silicone-based surfactant; and
(D') 0 to 99.8 parts by mass of an aqueous solvent.
